# EUROPÄISCHE PATENTSCHRIFT

(11) **EP 2 223 427 B1**
(45) Veröffentlichungstag und Bekanntmachung des Hinweises auf die Patenterteilung: **25.03.2015**
(21) Anmeldenummer: 08861128.0
(22) Anmeldetag: 15.10.2008
(51) Int. Cl.: H02P 25/14

(54) **VERFAHREN UND VORRICHTUNG ZUM BETREIBEN EINES ELEKTRISCHEN ANTRIEBS MIT HILFE EINER PHASENANSCHNITTSSTEUERUNG**
METHOD AND DEVICE FOR OPERATING AN ELECTRIC DRIVE WITH THE AID OF A PHASE ANGLE CONTROL
PROCÉDÉ ET DISPOSITIF POUR FAIRE FONCTIONNER UN ENTRAÎNEMENT ÉLECTRIQUE À L'AIDE D'UNE COMMANDE PAR RETARD D'AMORÇAGE

(30) Priorität: 14.12.2007 DE 102007060242
(43) Veröffentlichungstag der Anmeldung: 01.09.2010
(73) Patentinhaber: Robert Bosch GmbH, 70442 Stuttgart (DE)
(72) Erfinder: WALTER, Roland, 75233 Tiefenbronn (DE); WISZNIEWSKI, Jacek, 73095 Albershausen (DE); MEYER, Michael, 70374 Stuttgart (DE); DENGLER, Klaus, 70806 Kornwestheim (DE)
(86) Internationale Anmeldenummer: PCT/EP2008/063821
(87) Internationale Veröffentlichungsnummer: WO 2009/077221

(56) Entgegenhaltungen:
- EP-A- 1 398 871
- EP-A- 1 806 836
- DE-A1- 4 108 106
- DE-A1- 4 344 557
- US-A- 5 008 608
- US-A1- 2003 133 317

## Beschreibung

### Technisches Gebiet

Die vorliegende Erfindung betrifft das Gebiet der Ansteuerungen für elektrische Maschinen mithilfe des so genannten Phasenanschnitts.

### Stand der Technik

Bei bisherigen elektrischen Antrieben, wie z.B. bei Elektromotoren mit Kommutator besteht prinzipbedingt eine Phasenverschiebung zwischen angelegter Spannung und Motorstrom. Diese Phasenverschiebung ist in der Regel lastabhängig. Die Leistung derartiger Elektromotoren kann in der Regel stufenlos mithilfe einer so genannten Phasenanschnittssteuerung eingestellt werden. Die Phasenanschnittssteuerung ist ein Verfahren zur Leistungsregelung einer elektrischen Maschine, die mit Wechselspannung betrieben wird. Bei der Phasenanschnittssteuerung wird der Motorstrom verzögert nach dem Nulldurchgang der Versorgungswechselspannung eingeschaltet und bleibt bis zum nächsten Nulldurchgang eingeschaltet. Stromnulldurchgänge werden üblicherweise über einen Shunt, die Spannungsänderung über den Schalter oder Vorausberechnung ermittelt, so z.B. in DE 4108106, US 5008608, US 2003133317.

Eine Phasenanschnittssteuerung kann mithilfe eines Triacs durchgeführt werden. Der Triac leitet elektrischen Strom erst ab einem Zündimpuls und nach der Zündung des Triacs so lange, bis ein minimaler Strom, der so genannte Haltestrom, unterschritten wird. Ein Zünden des Triacs zu einem Zeitpunkt, zu dem durch die Phasenverschiebung bestimmter Motorstrom unterhalb des Haltestroms liegt, führt zu einem Nichtzünden des Triac. In diesem Fall wird der Elektromotor während der aktuellen Halbwelle nicht angesteuert. Das gleiche geschieht, wenn in den noch leitenden Triac gezündet wird. Dies führt zu Störungen beim Betrieb des Elektromotors, wie z.B. einer hohen Geräuschentwicklung, erhöhte EMV-Abstrahlung, Leistungsverlust und dergleichen:

Um sicherzustellen, dass das Zünden des Triacs immer in einem Bereich erfolgt, zu dem ein Motorstrom erwartet werden kann, der über dem Haltestrom liegt, wird in der Regel der Triac erst nach einer definierten Mindestzeit nach dem Nulldurch-gang der angelegten Spannung gezündet. Die definierte Mindestzeit wird so festgelegt, dass sichergestellt ist, dass das Zünden des Triacs bei einem ausreichend hohen Strom erfolgt. Da die Phasenverschiebung zwischen der angelegten Spinnung und dem Motorstrom von der Last abhängig ist, bestimmt sich diese definierte Mindestzeit aus der Phasenverschiebung, die der größten in dem Gesamtsystem auftretenden Phasenverschiebung entspricht, und einer zusätzlichen Sicherheitszeit, die mögliche Bauteilschwankungen des Triacs, z.B. Schaltzeiten, berücksichtigen soll. In einem Betriebszustand, bei dem die Phasenverschiebung zwischen angelegter Spannung und Motorstrom geringer ist als die maximale Phasenverschiebung ergibt sich somit ein größerer Zeitraum, an dem eine Zündung des Triacs verhindert wird.

Dies führt unter anderem zu einer erhöhten Erzeugung von Oberwellen, die aufgrund einer erhöhten Lichtbogenbildung zu verringerten Kohlestandzeiten an den Bürsten des Kommutators führen und die die Störabstrahlung des Elektromotors erhöhen. Zusätzlich tritt eine weitere Erwärmung des Motors durch erhöhte Verlustleistung auf. Das Dokument EP 1398871 definiert daher einen virtuellen Nulldurchgang für die Spannung aus den Ein- und Ausschaltzeiten der laufenden Halbwelle, um die Zündwinkel für die folgende Halbwelle zu berechnen. Dieser virtuelle Nulldurchgang ist eine Rechengröße und fällt mit dem Höchstwert des Stromes zusammen, nicht mit seinem Nulldurchgang.

Es ist Aufgabe der vorliegenden Erfindung, ein Verfahren und eine Steuervorrichtung zum Betreiben eines Elektromotors mit einer Phasenanschnittssteuerung zur Verfügung zu stellen, bei dem diese Nachteile vermieden werden.

### Offenbarung der Erfindung

Diese Aufgabe wird durch das Verfahren zum Betreiben eines Elektromotors gemäß Anspruch 1 sowie durch die Steuervorrichtung für einen Elektromotor gemäß Anspruch 5 gelöst.

Weitere vorteilhafte Ausgestaltungen der Erfindung sind in den abhängigen Ansprüchen angegeben.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine schematische Darstellung eines Motorsystem mit einem Elektromotor, einem Triac und einer Steuereinheit gemäß einer Ausführungsform der Erfindung; und
Fig. 2 ein Signal-Zeit-Diagramm zur Veranschaulichung des Verfahrens zum Bestimmen des frühesten Zündzeitpunkts bei dem Motorsystem der Fig. 1.

### Beschreibung der Ausführungsformen

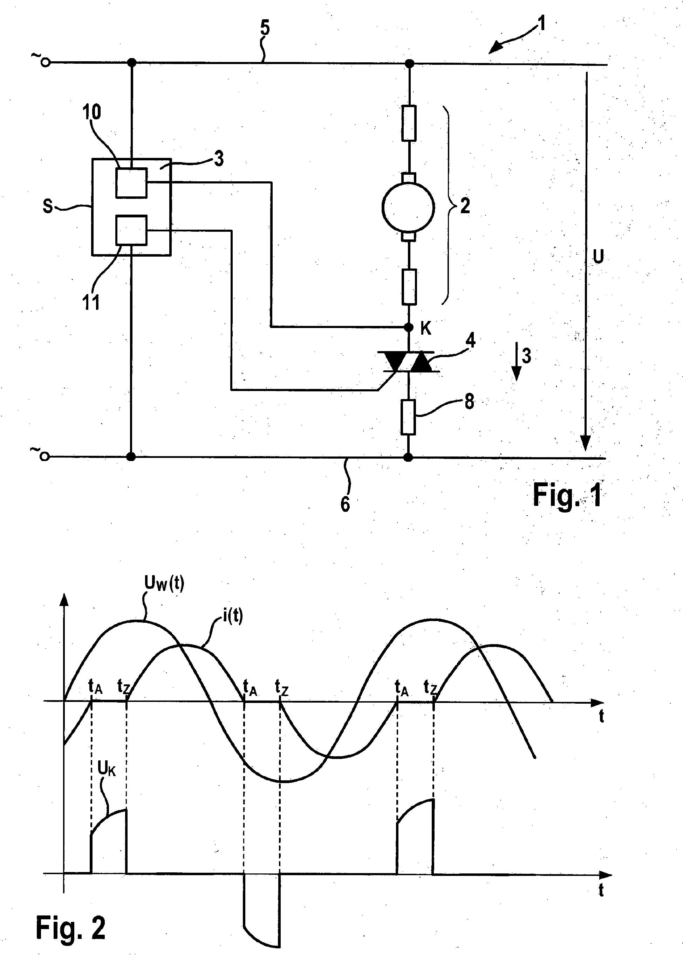

In Fig. 1 ist ein Motorsystem 1 mit einer elektrischen Maschine 2, einer Steuereinheit 3 und einem Schaltelement 4 dargestellt. Die elektrische Maschine 2 ist in Form eines Elektromotors mit Kommutator vorgesehen. Der Elektromotor 2 soll mit variabler Leistung angesteuert werden. Dazu ist der Elektromotor 2 in Serie mit dem Schaltelement 4 und einem (optionalen) Strombegrenzungswiderstand 8 zwischen einer ersten und einer zweiten Wechselspannungsleitungen 5, 6 geschaltet.

Das Schaltelement 4 ist vorzugsweise als Triac 4 ausgebildet, der nichtleitende und leitende Zustände einnehmen kann. Der Triac 4 wird leitend, wenn an seinem Steueranschluss ein Spannungsimpuls angelegt wird und der Betrag des durch ihn fließenden Stromes einen bestimmten Grenzwert übersteigt. Der Betrag des kleinsten Stromes durch den Triac 4, bei dem ein Zünden erfolgen kann, wird Haltestrom genannt. Je nach Stromrichtung weist ein derartiger Triac 4 einen positiven Haltestrom für eine positive Stromrichtung und einen negativen Haltestrom für eine negative Stromrichtung auf, die verschieden sein können.

Der Triac 4 wird von der Steuereinheit 3 angesteuert, um eine Phasenanschnittsteuerung zu realisieren. Die Phasenanschnittsteuerung bewirkt, dass der Motorstrom nur während eines vorbestimmten Zeitanteils während einer Halbwelle des Motorstroms ohne Phasenanschnitt fließen kann. Der vorbestimmte Zeitanteil wird durch eine Stellgröße S, die der Steuereinheit 3 bereitgestellt wird, bestimmt. Die Stellgröße S bestimmt die Leistung, mit der der Elektromotor 2 angesteuert werden soll.

Die Ansteuerung des Triacs 4 erfolgt idealerweise eine von der Stellgröße S abhängigen Zeitdauer nach dem Nulldurchgang des Motorstroms, so dass der Motorstrom nur ab einem Zündzeitpunkt (vorbestimmte Zeit nach Nulldurchgang des Motorstroms) bis zum erneuten Erreichen (annähernd) des Nulldurchgangs des Motorstroms leitend bleibt. Dadurch wird die dem Elektromotor 2 bereitgestellte Leistung auf einen Anteil der (ohne Phasenanschnitt möglichen) Maximalleistung reduziert.

Eine Schwierigkeit besteht darin, den Zeitpunkt des Nulldurchgangs des Motorstroms genau zu bestimmen, da der Verlauf des Motorstroms in der Regel nicht erfasst wird. Auch kann bei einem Phasenanschnitt in jeder Halbwelle die zeitliche Position des Nulldurchgangs nicht unmittelbar bestimmt werden.

Der Steuereinheit 3 wird die dem Elektromotor angelegte Wechselspannung Uw bereitgestellt. Aufgrund der lastabhängigen, variablen Phasenverschiebung zwisehen der an die Reihenschaltung von Elektromotor 2 und Triac 4 angelegten Wechselspannung U_{W} und dem durch den Elektromotor 2 fließenden Motorstrom sind die Nulldurchgänge des Motorstroms I nicht genau detektierbar. Das bisherige Verfahren des Festlegens einer vordefinierten Mindestzeit ab dem Zeitpunkt des Nulldurchgangs der an den Elektromotor 2 angelegten Spannung hat aber den Nachteil, dass sich an der größtmöglichen Phasenverschiebung zwischen Motorstrom und angelegter Spannung orientiert und somit für andere Betriebszustände, bei denen die Phasenverschiebung geringer ist, nicht optimal ist.

Es wird daher vorgeschlagen, zum Detektieren der Zeitpunkte der Nulldurchgänge des Motorstroms das Spannungspotenzial an einem Knoten K zwischen dem Triac 4 und dem Elektromotor 2 abzugreifen und einer Detektionseinheit 10 der Steuereinheit 3 zur Verfügung zu stellen. Über einem leitenden Triac 4 tritt in der Regel ein Spannungsabfall von ca. 2 V auf und bei einem gesperrten Triac ist dieser hochohmig, so dass über diesem die volle Wechselspannung anliegt. Eine Steuereinrichtung 11 der Steuereinheit 3 kann daher die Schaltzeitpunkte des Triacs 4 feststellen, indem Spannungssprünge über dem Triac 4 durch Überwachen der Spannung zwischen der zweiten Wechselspannungsleitung 6 und dem Knoten K detektiert werden. Dies erfolgt durch die Detektionseinheit 10. D.h. es werden sowohl die Spannungssprünge, die beim Zünden des Triacs 4, d.h. beim Durchschalten erfolgen, als auch die Spannungssprünge, die beim Abschalten des Triacs 4 erfolgen, detektiert. Da das Zünden von der Steuereinrichtung 11 ausgelöst wird, können durch die Steuereinrichtung 11 diejenigen Spannungssprünge zu den Schaltzeitpunkten, zu denen der Triac 4 ausschaltet, bestimmt werden, indem die Spannungssprünge beim Einschalten des Triacs 4 unberücksichtigt bleiben. Die Spannungssprünge beim Einschalten des Triacs 4 werden erkannt, da sie zeitgleich zum Zündsignal sind.

Der Spannungssprung, der aufgrund eines Abschaltens des Triacs 4 erfolgt, lässt sich nun dazu verwenden, den Zeitpunkt zu ermitteln, zu dem der Triac 4 erneut gezündet werden kann. Der Zeitpunkt des Abschaltens des Triacs 4 kann nun näherungsweise als Nulldurchgang des Motorstroms angenommen werden. Alternativ kann abhängig von dem entsprechenden Haltestrom des Triacs 4, der Frequenz der Wechselspannung und anderen Größen der Zeitpunkt des Nulldurchgangs des Motorstromes ermittelt werden. Der Zeitpunkt, zu dem ein erneutes Zünden des Triacs 4 möglich ist, wird durch Hinzuaddieren einer Totzeit ermittelt, die angibt, bis wann der Motorstrom einem Stromwert entspräche, der größer ist als der entsprechende Haltestrom des Triacs 4.

Die Steuereinheit 3 kann beispielsweise durch einen Mikrocontroller realisiert sein, der in der Lage ist, die Verläufe der Wechselspannungen auszuwerten und insbesondere in der Lage ist, die Spannungsdifferenz zwischen der Spannung an dem Knoten K und der Spannung der zweiten Wechselspannungsleitung 6 so auszuwerten, dass die Zeitpunkte der Spannungssprünge aufgrund eines Schaltens des Triacs 4 erkannt werden können.

In Fig. 2 sind Signal-Zeit-Diagramme dargestellt, die die an den Elektromotor 2 angelegte Wechselspannung U_{W}, den nacheilenden Motorstrom i und die Spannung U_{K} zwischen der zweiten Wechselspannungsleitung und dem Knoten K angeben. Man erkennt die Spannungssprünge beim Zündzeitpunkt t_{Z} und zum Abschaltzeitpunkt t_{A}, die durch die Steuereinheit 3 erkennbar sind.

Das Anpassen an den frühest-möglichen Zündzeitpunkt hat den Vorteil, dass die Bürstenstandzeiten deutlich erhöht werden können, da aufgrund des geringeren Oberwellenanteils die Lichtbogenbildung reduziert ist. Die EMV-Emissionen sind ebenfalls reduziert. Auch die Eigenerwärmung des Elektromotors ist dadurch geringer.

## Patentansprüche

1. Verfahren zum Betreiben eines Elektromotors (2) mit einem Phasenanschnitt mit folgenden Schritten:
- Anlegen einer Wechselspannung (U_{W}) an eine Reihenschaltung des Elektromotors (2) und eines Triacs (4), wobei der Triac (4) durch Anlegen eines Zündsignals durchschaltet und das Fließen eines Motorstromes (i) unterbindet, wenn der Betrag des Motorstromes (i) einen Haltestrom unterschreitet;
- Bestimmen eines Zeitpunkts eines virtuellen Nulldurchgangs des Motorstroms (i), der fließen würde, wenn der Triac (4) durchgeschaltet wäre, derart, dass während einer Halbwelle einer über dem Triac (4) abfallenden Spannung (U_{K}) ein Abschaltzeitpunkt (t_{A}) des Triacs (4) mittels eines Spannungssprungs der Spannung (U_{K}) beim Abschalten des Triacs (4) detektiert wird;
- Einschalten des Schaltelements (4) zu einem Einschaltzeitpunkt (t_{Z}), der von dem Zeitpunkt des virtuellen Nulldurchgängs des Motorstroms (i) derart abhängig ist, dass eine Totzeit zum detektierten Abschaltzeitpunkt (t_{A}) hinzu addiert wird, bis zu der der Motorstrom (i) einem Stromwert entspräche, der größer ist als der Haltestrom des Triacs (4).

2. Verfahren nach Anspruch 1, wobei der Triac (4) zu einem Zeitpunkt eingeschaltet wird, der von einer bereitgestellten Stellgröße abhängig ist, die die gewünschte Leistung des Elektromotors (2) angibt.

3. Verfahren nach Anspruch 1, wobei die Zeitpunkte des Auftretens des Spannungssprungs der über dem Triac (4) anliegenden Spannung (U_{K}) als die Zeitpunkte des Auftretens des Spannungssprungs bestimmt werden, zu dem der Triac (4) nicht eingeschaltet wird.

4. Verfahren nach Anspruch 1, wobei die Totzeit festgelegt ist oder abhängig von der Frequenz der angelegten Wechselspannung und/oder dem Haltestrom des Triacs (4) gewählt wird.

5. Motorsteuereinheit zum Betreiben eines Elektromotors (2) mit einem Phasenanschnitt, wobei an eine Reihenschaltung des Elektromotors (2) und einem Triac (4) eine Wechselspannung (U_{W}) angelegt ist, wobei der Triac (4) durch Anlegen eines Zündsignals durchschaltet und das Fließen eines Motorstromes (i) unterbindet, wenn der Betrag des Motorstroms (i) einen Haltestrom unterschreitet; umfassend:
- eine Detektionseinheit (10) zum Bestimmen eines Zeitpunkts eines virtuellen Nulldurchgangs des Motorstroms (i), der fließen würde, wenn der Triac (4) durchgeschaltet wäre, derart, dass die Detektionseinheit (10) während einer Halbwelle einer über dem Triac (4) abfallenden Spannung (U_{K}) einen Abschaltzeitpunkt (t_{A}) des Triacs (4) mittels eines Spannungssprungs der Spannung (U_{K}) beim Abschalten des Triacs (4) detektiert; und
- eine Steuereinrichtung (11) zum Einschalten des Triacs (4) zu einem Zeitpunkt, der von dem Zeitpunkt des virtuellen Nulldurchgangs des Motorstroms (i) derart abhängig ist, dass die Steuereinrichtung (11) eine Totzeit zum detektierten Abschaltzeitpunkt (t_{A}) hinzu addiert, bis zu der der Motorstrom (i) einem Stromwert entspräche, der größer ist als der Haltestrom des Triacs (4).

## Claims

1. Method for operating an electric motor (2) using phase gating, said method comprising the following steps:
- applying an AC voltage (U_{w}) to a series circuit comprising the electric motor (2) and a triac (4), wherein the triac (4) turns on by application of an ignition signal and suppresses the flow of a motor current (i) when the magnitude of the motor current (i) falls below a holding current;
- determining a time of a virtual zero crossing of the motor current (i) that would flow if the triac (4) were turned on such that, during a half-cycle of a voltage drop (Uₖ) across the triac (4), a switch-off time (t_{A}) of the triac (4) is detected by means of a sudden voltage change in the voltage (Uₖ) when the triac (4) switches off;
- switching on the switching element (4) at a switch-on time (t_{Z}), which is dependent on the time of the virtual zero crossing of the motor current (i) such that a dead time is added to the detected switch-off time (t_{A}), up until which dead time the motor current (i) corresponds to a current value which is greater than the holding current of the triac (4).

2. Method according to Claim 1, wherein the triac (4) is switched on at a time which is dependent on a provided manipulated variable, which specifies the desired power for the electric motor (2).

3. Method according to Claim 1, wherein the times of the occurrence of the sudden voltage change in the voltage (Uₖ) present across the triac (4) are determined as the times of the occurrence of the sudden voltage change at which the triac (4) is not switched on.

4. Method according to Claim 1, wherein the dead time is fixed or is selected depending on the frequency of the applied AC voltage and/or the holding current of the triac (4).

5. Motor control unit for operating an electric motor (2) using phase gating, wherein an AC voltage (U_{w}) is applied to a series circuit comprising the electric motor (2) and a triac (4), wherein the triac (4) turns on by application of an ignition signal and suppresses the flow of a motor current (i) when the magnitude of the motor current (i) falls below a holding current; said motor control unit comprising:
- a detection unit (10) for determining a time of a virtual zero crossing of the motor current (i) that would flow if the triac (4) were turned on such that the detection unit (10), during a half-cycle of a voltage drop (Uₖ) across the triac (4), detects a switch-off time (t_{A}) of the triac (4) by means of a sudden voltage change in the voltage (Uₖ) when the triac (4) switches off; and
- a control device (11) for switching on the triac (4) at a time which is dependent on the time of the virtual zero crossing of the motor current (i) in such a way that the control device (11) adds a dead time to the detected switch-off time (t_{A}), up until which dead time the motor current (i) corresponds to a current value which is greater than the holding current of the triac (4).

## Revendications

1. Procédé pour faire fonctionner un moteur électrique (2) avec un découpage de phase, comprenant les étapes suivantes :
- application d'une tension alternative (U_{W}) à un circuit série constitué du moteur électrique (2) et d'un triac (4), le triac (4) devenant passant par l'application d'un signal d'amorçage et inhibant la circulation d'un courant de moteur (i) lorsque la valeur du courant de moteur (i) devient inférieure à un courant de maintien ;
- détermination d'un instant d'un passage par zéro virtuel du courant de moteur (i) qui circulerait si le triac (4) était passant, de telle sorte que pendant une demi-onde d'une tension de chute (U_{K}) aux bornes du triac (4), un instant de déconnexion (t_{A}) du triac (4) est détecté au moyen d'un saut de tension de la tension (U_{K}) lors de la déconnexion du triac (4) ;
- mise en circuit de l'élément de commutation (4) à un instant de mise en circuit (t_{Z}) qui dépend de l'instant du passage par zéro virtuel du courant de moteur (i) de telle sorte qu'un temps mort est ajouté à l'instant de déconnexion (t_{A}) détecté jusqu'à celui auquel le courant de moteur (i) correspondrait à une valeur de courant qui est supérieure au courant de maintien du triac (4).

2. Procédé selon la revendication 1, selon lequel le triac (4) est mis en circuit à un instant qui dépend d'une grandeur de commande fournie, laquelle indique la puissance souhaitée du moteur électrique (2).

3. Procédé selon la revendication 1, selon lequel les instants auxquels se produit le saut de tension de la tension (U_{K}) appliquée aux bornes du triac (4) sont déterminés comme étant les instants auxquels se produit le saut de tension pour lequel le triac (4) n'est pas mis en circuit.

4. Procédé selon la revendication 1, selon lequel le temps mort est défini ou est choisi en fonction de la fréquence de la tension alternative appliquée et/ou du courant de maintien du triac (4).

5. Unité de commande de moteur destinée à faire fonctionner un moteur électrique (2) avec un découpage de phase, une tension alternative (U_{W}) étant appliquée à un circuit série constitué du moteur électrique (2) et d'un triac (4), le triac (4) devenant passant par l'application d'un signal d'amorçage et inhibant la circulation d'un courant de moteur (i) lorsque la valeur du courant de moteur (i) devient inférieure à un courant de maintien, comprenant :
- une unité de détection (10) destinée à déterminer un instant d'un passage par zéro virtuel du courant de moteur (i) qui circulerait si le triac (4) était passant, de telle sorte que l'unité de détection (10), pendant une demi-onde d'une tension de chute (U_{K}) aux bornes du triac (4), détecte un instant de déconnexion (t_{A}) du triac (4) au moyen d'un saut de tension de la tension (U_{K}) lors de la déconnexion du triac (4) ; et
- un dispositif de commande (11) destiné à mettre en circuit le triac (4) à un instant qui dépend de l'instant du passage par zéro virtuel du courant de moteur (i) de telle sorte que le dispositif de commande (11) ajoute un temps mort à l'instant de déconnexion (t_{A}) détecté jusqu'à celui auquel le courant de moteur (i) correspondrait à une valeur de courant qui est supérieure au courant de maintien du triac (4).
